# EUROPEAN PATENT SPECIFICATION

(11) **EP 0 561 513 B1**
(45) Date of publication and mention of the grant of the patent: **26.03.1997**
(21) Application number: 93301333.6
(22) Date of filing: 23.02.1993
(51) Int. Cl.: A23G 3/00, A23G 1/20

(54) **Process for the production of a confectionery bar**
Verfahren zur Herstellung eines Konfektriegels
Méthode de production d'une barre de confiserie

(30) Priority: 16.03.1992 US 852443
(43) Date of publication of application: 22.09.1993
(73) Proprietor: Kraft Jacobs Suchard SA, CH-8008 Zürich (CH)
(72) Inventor: Vogt, Norbert, CH-1588 Cudrefin (CH)
(74) Representative: Eyles, Christopher Thomas

(56) References cited:
- CH-A- 649 444
- GB-A- 2 238 945
- US-A- 2 824 806
- US-A- 3 917 861
- US-A- 4 038 427
- US-A- 4 289 790
- US-A- 4 568 557
- US-A- 4 569 848
- US-A- 4 888 187
- CONFECTIONERY PRODUCTION vol. 57, no. 10, October 1991, SURBITON, SURREY, GB pages 768 - 770 'UCM shell chocolate moulding plant'

## Description

### BACKGROUND OF THE INVENTION

### 1. Field of the Invention

The present invention relates to a novel and inventive process for the production of a filled chocolate-covered bar, for example a cereal bar possessing a chocolate covering or shell, and wherein the process is implemented through the intermediary of an installation incorporating a continually operating or advancing molding line of essentially basic type of construction.

In essence, the bar which is produced pursuant to the inventive process, includes a chocolate covering or shell which is poured into a chocolate-molding form of a continuous molding installation, and which mold directly receives the bar filling composition within this molded shell, whereby the filling is introduced through the intermediary of a screw dosing arrangement and preferably without any interruption of the continuous operating cycle.

In connection with the foregoing, coming into consideration as masses utilized for the coverings or shells for bars are such as may consist of chocolates and/or other fat-containing compositions which are formulated in conformance with guidelines prescribed by appropriate legal authorities, as well as fillings which are constituted from mixtures of cereals, such as crispies, oil seed or nut kernels and/or various types of dried fruits and/or nuts which are coated with chocolate.

In the instance of application as described herein, through the manufacture or production of the filled chocolate-covered bar in a continuous-molding installation, the product is imparted the configuration of a filled bar which unifies a uniform or regular exterior appearance with the sensorial or perceptive lightness of an ordinary or common bar.

Heretofore, cereal bars incorporating chocolate coverings or shells have been produced on automatic molding machines or roll molding presses. This caused the finished product to assume a more or less irregular or non-uniform external appearance. In the commonly employed processes, a dry mixture constituted from cereals and extrudates of all types; such as oil seed or nut kernels, fruits and the like, is ordinarily admixed in suitable proportions with a liquid binder medium consisting of chocolate or a similar fat-containing composition, or another syrup-like adhesive composition, and this mixture is then extruded through the intermediary of grooved roll molding presses, cooled, partitioned, encompassed with a coating composition, cooled again, and then packaged.

In connection with the foregoing sequence of operation, there are presently known numerous processes for the production of confectionary products of the type considered herein, employing various types of chocolate or dragee-covered filler materials.

Thus, pursuant to the inventive process, a binder is applied onto the filling constituents consisting, for example, of cereals and their extrudates of all types, nut kernels, fruits and so forth as an encompassing coating in the configuration of a dragee layer. Subsequent to the implementation of the drageeing and the admixing of the individual filling constituents with each other, the filling is no longer viscous in nature as it has been in the current state-of-the-art, but under specific climatic conditions, remains capable of being poured.

In the usual sense as employed in the prior art, a binder or agglomerating medium for cereal bars is considered to be a liquid consisting of a sugar solution, a fat mixture, or any other binder medium which fixedly bonds together the constituents of a mixture, which had been dry prior to the admixing thereof with the binder, during the further course of the processing through either cooling or another thermal treatment.

As a binder medium for the filling constituents, such as cereals, nut kernels or the like, employed in the presently described instance of utilization for the production of filled chocolate-covered bars, there is considered a covering layer applied through a drageeing procedure, and which is constituted from at least one inner or first layer of a chocolate mass and/or another fat-containing composition and of an outer or second adhesive layer, such as from a fatty substance, which is applied over the inner layer.

Heretofore, at the end of the drageeing procedure for the cereal, nut kernel and/or fruit constituents of the filling, a glossy and polished layer or coating of the most widely varying compositions was applied onto the dragees in order to protect the product from impacts, effects of heat and so forth, and to impart a more aesthetically pleasing exterior appearance thereto.

In contrast with the current state-of-the-technology, in the herein described inventive process of producing confections such as the chocolate-covered cereal bars, a glossy or polished smooth outer shell is not desired for the dragees of the filling. In contradistinction with the foregoing, at the conclusion of drageeing process, an outer coating layer constituted from a fat is applied over the dragees to form the adhesive layer such that, during the further course of the process, this layer serves to enable the individual parts of the filling to adhere to each other at the right point in time through the application of pressure and heat.

Designated as the adhesive layer for the cereal/nut kernel or other filling components is the fatty coating which is applied onto the layer consisting of the chocolate composition at the end of the drageeing sequence. The adhesive layer consists of either an animal or vegetable fat possessing a melting point of a maximum of 26°C and which is lower than that of the previously applied layer of a chocolate or fat-containing dragee mass or composition.

The drageeing or coating procedure for the filling components has already been described in the technical literature for quite some time. In the inventive process as herein described, the drageed fillings; i.e. such as cereals, nut kernels, dried fruit, and so forth, are filled into the drageeing installation; for example, such as a rotatable drum, fluidized bed and the like, set into motion, and the first encapsulation or covering layer in the form of the chocolate mass and/or other fat-containing composition is coated thereon and distributed until the desired coating or covering condition has been reached, and is then hardened or set with the aid of a constant circulation of air about the drageed goods.

### 2. Discussion of the Prior Art

In contrast with the present invention, the prior art, as currently known in this technology, does not set forth a process of producing a filled chocolate-covered bar, for example a cereal bar, with a chocolate coating or shell in a manner analogous to that described herein.

Munk, et al. U. S. Patent 4,957,754 describes an edible food container in which two different fatty coating layers are applied onto a central or filling portion, wherein the top glaze is free from sugar and in which a prime coat beneath the top glaze has a higher setting temperature than the top glaze. Although this describes the utilization of two fatty layers forming coatings of different compositions and possessing different melting points, there is no disclosure of the particular process in the formation of and constituents of a filled chocolate-covered bar analogous to that set forth by the present invention.

Koppa U. S. Patent 4,748,031 describes an extrusion procedure for co-extruding three different materials to provide a composite food product having a covering layer of specified material superimposed on an oil-based fluid or gel forming a moisture barrier. There is no disclosure of the particular type of process in the forming of a filled chocolate-covered bar as considered by the inventive concept.

Simelunas U. S. Patent 4,719,117 describes the covering of dough pieces for baked products by continuously extruding dissimilar materials to form a core and covering, and is not unduly pertinent with respect to the inventive process in the forming of a filled chocolate-covered bar.

Martin U. S. Patent 4,038,427 discloses a ready-to-eat breakfast cereal in which various toasted cereal flakes or puffed cereals are preserved and agglomerated within a fat-syrup double or single coating. However, there is no disclosure of a process for producing a filled chocolate-covered bar analogous to that contemplated and described herein.

Viera, et al. U. S. Patent 3,917,861 describes a process for producing food products in which loose cereal particles are bonded through the intermediary of a fat-based binder system and the mixture is continuously compacted in a gradual manner so as to form a sheeting for lamination with a nutritious filling. There is no disclosure of the unique process and novel filled chocolate-covered bar construction having the dual chocolate and fat-adhesive layers applied onto a filling composition and thereafter bonded through the application of pressure and heat as set forth by the present invention.

Becker, et al. U. S. Patent 4,568,557 relates to a process for producing a multi-constituent snack food in which a high dietary fiber-containing filling consisting of cereal, peanut butter and the like is covered with a composite fat-containing coating serving as a binder and formulating a processing aid for the extrusion of the mixture into specific shapes so as to be adapted for immediate consumption. This is the type of process which is described as representative of the prior art, and over which the inventive filled chocolate-covered bar molding process provides significant distinctions and attendant advantages.

Bruelle U. S. Patent 4,289,790 describes a storage-stable confection having a plurality of layers of chocolate and gasified candy covering or encasing a crunchy core constituted of a composition of cereals, dried fruit and/or nuts. This confection does not relate to the inventive concept setting forth a process of producing the novel filled chocolate-covered bar as described and claimed herein.

Giorgetti, et al. U. S. Patent 4,569,848 describes a confectionary product in which a snack-type food, including a filling such as a cereal or the like, is adapted to be covered by a chocolate product. There is no disclosure of the inventive process or resultant chocolate-covered bar of the type contemplated by the present invention.

Selleck U. S. Patent 4,348,949 describes the formation of a baked bun of composite constituents having a covering imposed on a filling, wherein the covering is in the form of a layer or coating of another edible material, and in which notches are formed in a continuous strip of such baked buns in order to facilitate the separation thereof into discrete segments or individual buns. There is no disclosure of the inventive process and novel chocolate-covered bar of the type described herein.

In Confectionery Production, October 1991, pages 768 to 770 there is described a shell chocolate molding plant which is said to be suitable for manufacture of a variety of centre-filled and solid products. The complete production line incorporates a mold heater; a No. 1 depositor with a single hopper for the chocolate shell; a No. 1 shaker which imparts a vertical shake for 25 seconds; a mold turnover device which allows the molds to be turned over for 60 seconds; a chocolate collection device for collecting excess chocolate from the molds that have been turned over; a shell cooling device which provides for six minutes of shell cooling; a No. 2 depositor which is of the dual-hopper one-shot type; No. 2 and No. 3 shakers which act vertically for 45 seconds; a centre cooling device which acts for six minutes; a chocolate rim heating device; a No. 3 depositor of the single-hopper type for depositing the chocolate bottoms; a No. 4 shaker which acts vertically for 20 seconds; a final cooling device which provides for 12 minutes of cooling; an automatic demolding device which acts by mold tapping; and a product take-away conveyor. Filling materials can include puffed rice (crispies).

### SUMMARY OF THE INVENTION

In essence, the present invention is directed to the provision of a novel process for the production of a chocolate-covered bar, for example a cereal bar possessing a chocolate shell or covering, and which is conveniently manufactured on a continually operating single-plane molding line in which drageed filling constituents are poured into chocolate-lined molds and subjected to pressure and heat for bonding thereof, and to impart thereto a regular external appearance with the sensorial lightness of an ordinary bar.

Furthermore, the invention is directed to the formation of chocolate-covered bars, for example chocolate-covered cereal bars, of suitable sizes constituted from fillings of expanded grains or their mixtures in the form of crispies with or without aromatics, with the filling being drageed with a chocolate mass and/or another fat-containing composition to form a first layer, and a second superimposed layer of a lower-melting fat, such as butter fat, vegetable fat or the like producing an adhesive outer coating or layer, and wherein the constituents, if desired, are admixed in suitable proportions with drageed nut kernels which maybe either roasted, raw, whole or chopped, with the cereals, and in a process of a molding line, preferably a continuous operating process of a molding line, are filled into chocolate-lined molds, compacted, heat-treated and sealed to produce the chocolate-covered bars, e.g. chocolate-covered cereal bars.

Accordingly, it is an object of the present invention to provide a process for the production of a cereal bar possessing a chocolate covering or shell on a continually operating molding installation.

A more specific object of the invention resides in the process of producing molded chocolate-covered cereal bars wherein the filling is drageed with a first layer consisting of a chocolate mass or fat-containing composition, and with a superimposed second layer of a fat composition forming an adhesive layer externally of the first layer and which has a lower melting point than the first layer.

Yet another object of the present invention is to provide for the production of a filled chocolate-covered bar, for example a chocolate-covered cereal bar, having the properties specified herein and produced in accordance with the process as described hereinbefore.

### BRIEF DESCRIPTION OF THE DRAWINGS

Reference may now be had to the following detailed description of an exemplary embodiment of the invention, taken in conjunction with the accompanying drawings; in which:
Figure 1 illustrates a generally schematic flow chart for a molding line of an installation for the implementation of the process in forming chocolate-covered cereal bars pursuant to the invention;
Figure 2 illustrates in a generally schematic pictorial representation, molding line stations for forming chocolate-covered cereal bars pursuant to the invention utilizing the molding process represented in Figure 1;
Figure 3 illustrates, generally schematically, a cross-sectional view through a cereal filling element showing the drageed coating thereof;
Figure 4 illustrates a feed dosing arrangement for supplying drageed filling material to molds for producing chocolate-covered cereal bars;
Figure 5 illustrates a schematic representation of the filling procedure of the molds to produce chocolate-covered cereal bars;
Figure 6 illustrates, generally diagrammatically, the heating, dosing and compacting arrangements for the filling material in the molds; and
Figure 7 illustrates, schematically, the forming of chocolate-covered cereal bars in notched molding forms.

### DETAILED DESCRIPTION

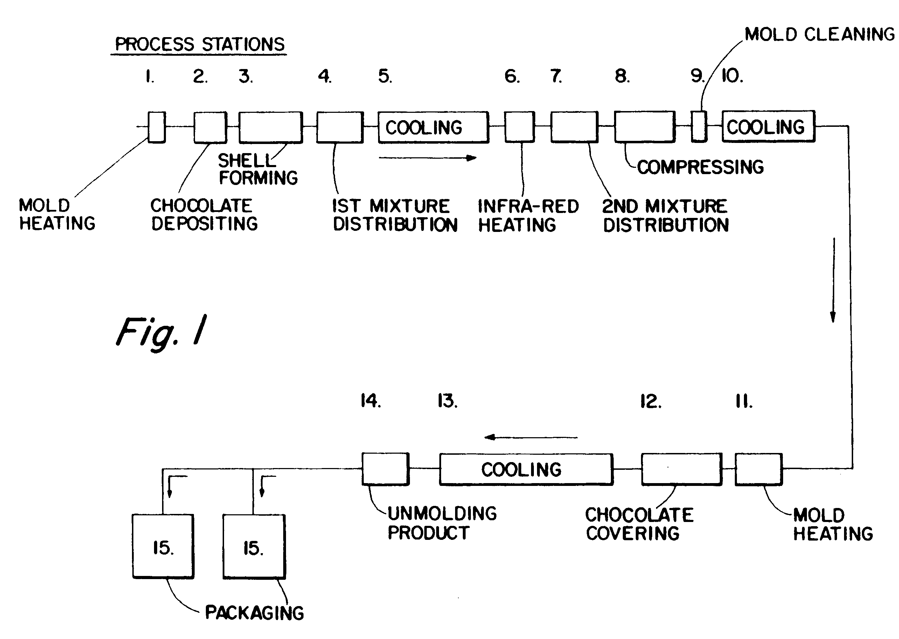

Referring in more specific particularity to Figure 1 of the drawings, which illustrates a schematic flow chart of the inventive process for forming cereal bars with chocolate shells or coverings. In essence, the steps in producing the drageed or chocolate-covered cereal bar through the formation thereof in suitable molds which are continuously advanced, is described hereinbelow in more specific detail, wherein a plurality of suitable molds, each for forming a chocolate shell for the chocolate-covered cereal bar, are preheated at a station 1; and thereafter has chocolate in a fluidized state deposited therein at a station 2.

At station 3, the chocolate shell for the cereal bar is formed in that each mold is subjected to either a turning, shaking or swinging motion so as to ensure that the chocolate which is poured into the cavity of the mold is uniformly distributed over the surfaces thereof.

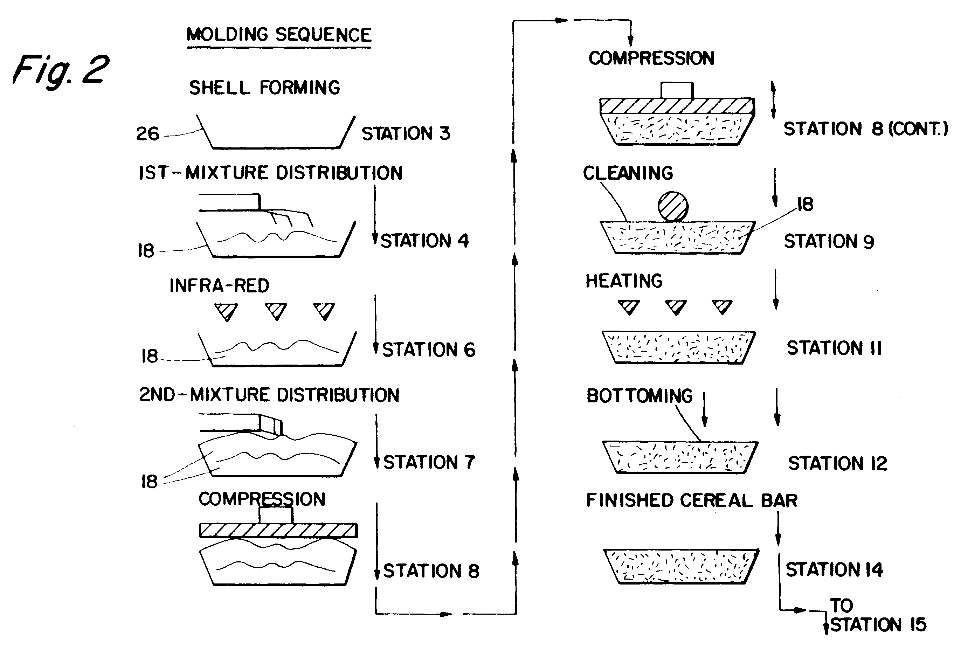

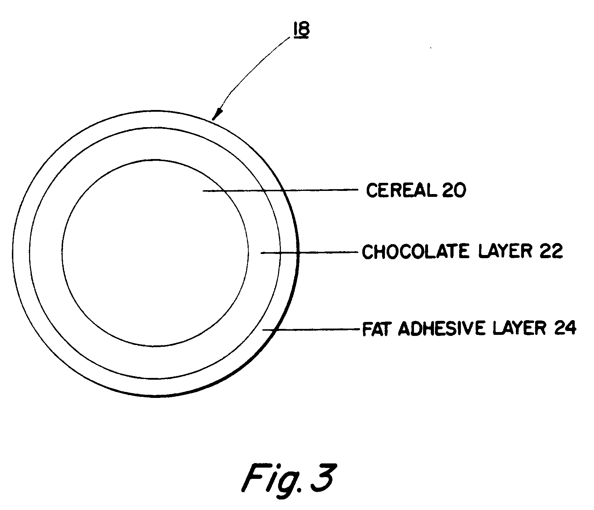

Thereafter, at station 4 there is fed a first layer of the filling 18 which has been formulated previously through the application onto the cereal and/or nut kernel constituents 20 of the filling of a dragee layer 22 consisting of a chocolate or similar fat-containing mass and an outer or second layer 24 thereover from a fat adhesive composition, as shown in Figure 3 and as described in further detail hereinbelow. Hereby, as pictorially shown in Fig. 2, the first layer of the drageed filling mixture 18 is now poured into the cavity of the chocolate-lined mold 26 in which the chocolate mass lining the latter is still in a generally liquid or fluidized state, and wherein the drageed and fat adhesive layer-coated mixture constituting the filling 18 is apportioned through a suitable feed screw dosing installation, as set forth in further detail hereinbelow.

As shown in Figure 1, and also pictorially in Fig. 2 of the drawings, the first filling mixture layer partially filling the mold, which has been somewhat cooled in a cooling tunnel at station 5, is subjected to suitable heating at station 6 which will cause the adhesive layer 24 of the constituents of the filling to be heated to above its melting point, whereas the first chocolate dragee layer 22 enclosing the cereal and/or nut kernels 20 therebelow is still maintained in its solid state, so as to cause the formation of a fixed bond between the chocolate shell in the mold and the filling. Preferably, although not necessarily, the quantity of the first filling portion 18 which is filled into the mold constitutes no more than approximately 30% of the entire filling constituent of the cereal bar.

Thereafter, as shown in station 7 in Fig. 1, one or more filling mixture layers are filled into the mold through a suitable feed or screw dosing installation, and the filling is subjected to compression at station 8 so as to cause the second or subsequently fed in layers of the filling to be more precisely and uniformly apportioned, distributed and compacted within the chocolate-lined mold cavity. Due to the foregoing, the first layer of filling fed into the mold serves as the foundation for the uniform apportioning of the second and/or subsequently following layers of filling material.

As shown in more specific particularity in Fig. 2, the chocolate shell is produced by lining the walls in the mold with the hot, liquefied chocolate which essentially is intended to form the shell or covering for the cereal bar, with the mold having been previously preheated; thereafter introducing the first layer of the drageed filling while the chocolate is in a still generally liquefied or fluid state, subjecting the upper surface of the mixture filling to heat, such as to a predetermined infrared heating, and thereafter introducing a second or further layers of the mixture to fill the mold then subjecting the filling to compression through the application of either pressure rams or pressure plates.

Thereafter, at station 9 in Fig. 1, as also shown more specifically shown in Fig. 2, the upper surface of the filling is subjected to suitable cleaning action; for instance, through the use of scrapers and rotary brushes in order to remove excess filling material extending above the upper level of the mold cavity. Cooling the filled mold is then carried out at station 10, followed by again heating the filled mold at station 11 to enable a chocolate covering to be applied over the upper surface of the cleaned and heated filling layer at station 12 so as to produce the covered bottom of the cereal bar, as shown in Fig. 2 of the drawing.

Thereafter, the chocolate-covered and finished cereal bar is subjected to cooling, for example, as in a cooling tunnel, and the finished chocolate-covered cereal bar is unmolded from the continuously advancing mold at station 14, and then conveyed to suitable packaging installations at stations 15.

Reverting more particularly to the desired compositions of the coatings or layers 22, 24 for the filling constituents 20 of the bar; for instance, for the cereals or nut kernels as shown in Fig. 3, the quantity of the applied dragee material or chocolate lies within the range of about 96% to 99.4% for the first layer 22, while the second or final outer layer 24 is constituted of an applied quantity of a fat adhesive coating of about 0.5% to 3%, consisting of either animal or vegetable fat, distributed about the chocolate or dragee layer, and as in the case of the first layer, hardened or set with the aid of low temperatures and in the presence of a constant circulation of air being implemented about the formulated product. The melting point for the fat which is utilized as the second or outer adhesive layer 24 for the cereal or filling constituents 20 lies below that of the applied chocolate mass or dragee composition of the first cereal filling covering layer 22.

The air temperature of the circulating air and the room temperature in the drageeing installation must hereby lie at least 9°C below, or even further below the solidifying point of the fat layer composition 24.

The binder constituent, consisting of the chocolate or dragee layer 22 and fat adhesive layer 24 for the drageed cereal mixture 20, should not exceed 50% by weight of the constituents of the total mixture of the filling 18.

The composition of the drageed fillings are typically 50% dragee filler (cereals, nut kernels, dried fruit, and so forth), 48% of chocolate covering, and 2% fat; all measured by weight.

The applied layers of chocolate and fat corresponds, in this example, to a mixture of filling 20 to coating 22, 24 in the ratio of about 50:50. Fillings in the usual sense for continuously formed or molded products are ordinarily capable of being pumped or poured, as whole confectionary items or portions thereof, or mixtures produced therefrom.

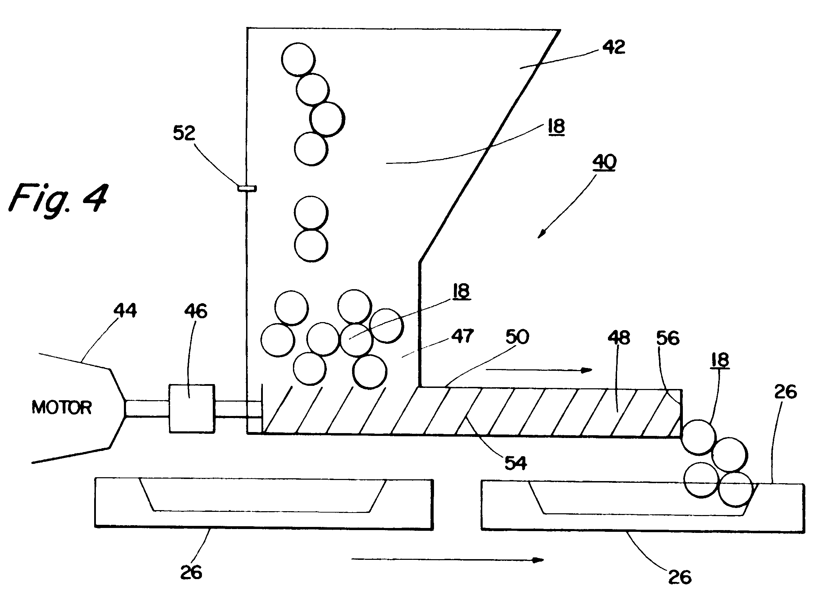

In the herein described utilization, the filling 18 is not introducible into the molds by being pumped or in segments or pieces but rather, under specific climatic conditions, is transportable and apportionable by means of feed screw dosing installations, as shown in Fig. 4 of the drawings. The mixture 18 constituted from drageed and fat-coated cereals and nut kernels is hereinbelow further designated as the filling.

The filling which is utilized in conjunction with the inventive process, as described, comprises cereals of suitable sizes consisting of expanded grains or their mixtures in the form of crispies, with or without flavorings, which is drageed with the chocolate mass or with another fat-containing composition as the first covering or coating layer 22, and then provided with a coating of a low temperature-melting fat constituting a second or adhesive layer 24, and with which there can be admixed, similarly as in the case of the cereal 20, drageed nut kernels (roasted, raw, whole pieces, or chopped) in suitable proportions.

The individual components of the mixture or filling 18 are mixed together with each other in such a manner prior to being conveyed into the chocolate shell located in the mold cavity or cavities, so as to produce a uniform distribution or consistency of the various constituents.

The mixture composition; by way of example only, consists of 50% of drageed extrudate from cereals; 50% of drageed nut kernels.

The required number of the feed screw metering or dosing arrangements in a continuous molding installation is dependent upon the compositions of the filling, and the appearance and shape of the finished product; i.e. chocolate-covered cereal bar. Consequently, a corresponding suitable number of such dosing or metering arrangements must be installed in order to be able to meet the most widely diverging production and product demands.

The described process hereby discloses a continuous in-line molding installation having two filling dosing or metering arrangements and their ancillary apparatus. In the necessary utilization of a plurality of dosing arrangements, the process of introducing the filling into the molds and compacting of the filling mixture effected along a continuous in-line molding installation is repeated with each working sequence.

After the excess chocolate has been poured out of the lined mold and the lined mold has been cleaned and turned back into position, the first layer of the filling is apportioned into the still liquefied chocolate mass lining the mold by means of the feed screw dosing or metering installation. This is carried out at a point in time such that through intermediary of the subsequent cooling step, at station 5 in Fig. 1, there is formed a firm bond between the encompassing chocolate coating and the filling.

The quantity of the first or initial filling layer which is conveyed into the mold, at stage 4, consists of no more than about 30% of the total filling constituent of the bar. Due to the following reasons the filling must be dosed a number of times in partial quantities into the chocolate shell lining the mold or molds.

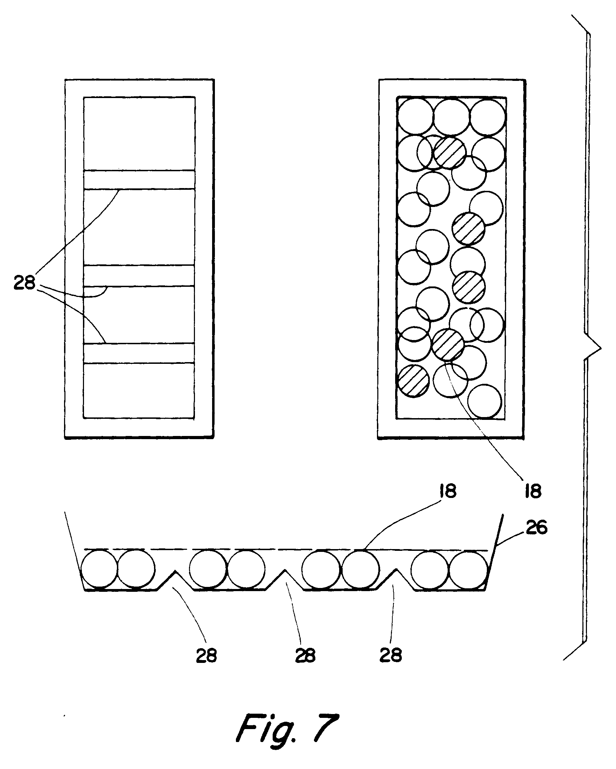

Thus, one reason for the dosing of a first filling layer into the mold constituting only a partial filling quantity resides in that the external configurations of the molded filled products are frequently produced with recesses or depressions, as shown in Figure 7, such that the confections or cereal bars may be more readily divided into so-called ribbed sections to enable tearing apart thereof into predetermined segments or portions. For filled products, in which the molded shell receives the filling in a negative shape, the depressions are visible subsequent to the formation of the shell in the form of raised portions or ridges 28 within the mold cavity.

In the herein described utilization of the molding process, these raised portions which are formed by the depressions must be compensated for through a multiple dosing of the filling constituents into the mold 26 so that there is produced a uniform distribution and compactability of the filling within the mole cavity.

A uniform distribution of the entire drageed cereal filling which is filled into a molded chocolate shell is not possible in the herein described process in view of the aspect that the shell would have to be cooled prior to the filling sequence, and consequently, the adherence of the filling to the shell would not be adequate. The bar would then be extensively subject to crumbling of its filling while being pulled apart by a consumer. Also because of this reason there is implemented a filling sequence in the formation of a plurality of successive filling layers.

The first filling layer, as shown in Figs. 1 and 2, is apportioned in such a manner that, subsequent to its filling into a mold shell, it possesses the most possibly uniform and planar upper surface in the cavity of the shell, as shown in Fig. 2. As a result thereof, the filling component of the second layer, or possibly successively dosed filling layers, are able to be apportioned or arranged more precisely and uniformly distributed and compacted within the mold.

Furthermore, through the dosing of the first filling layer into the still liquefied mass of the chocolate lining the mold, subsequent to the first passage of the partially filled mold through a cooling tunnel, as shown in Fig. 1, there is produced a fixed bond between the shell and the filling layer. The first filling layer, due to these reasons, serves as a foundation for the uniform apportioning of the second filling layer, or possible successively apportioned filling layers.

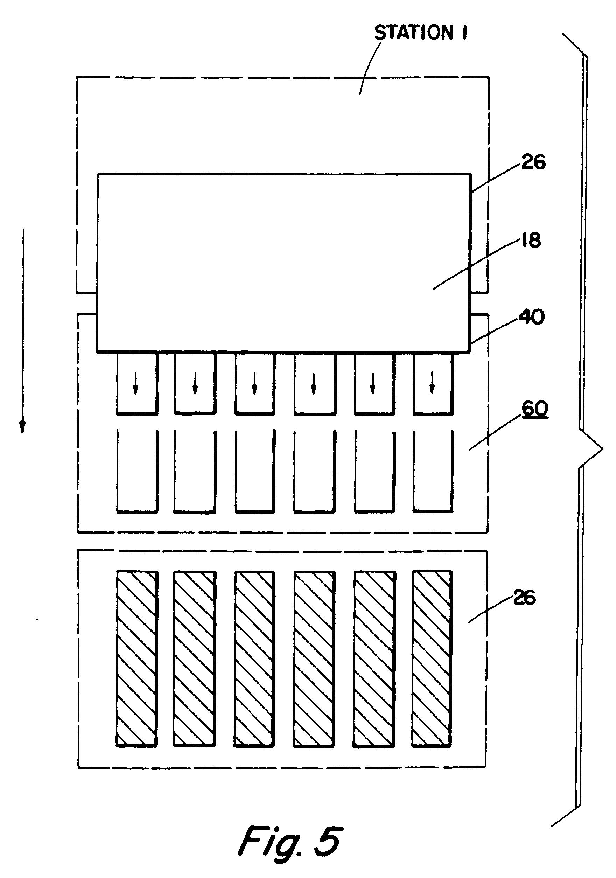

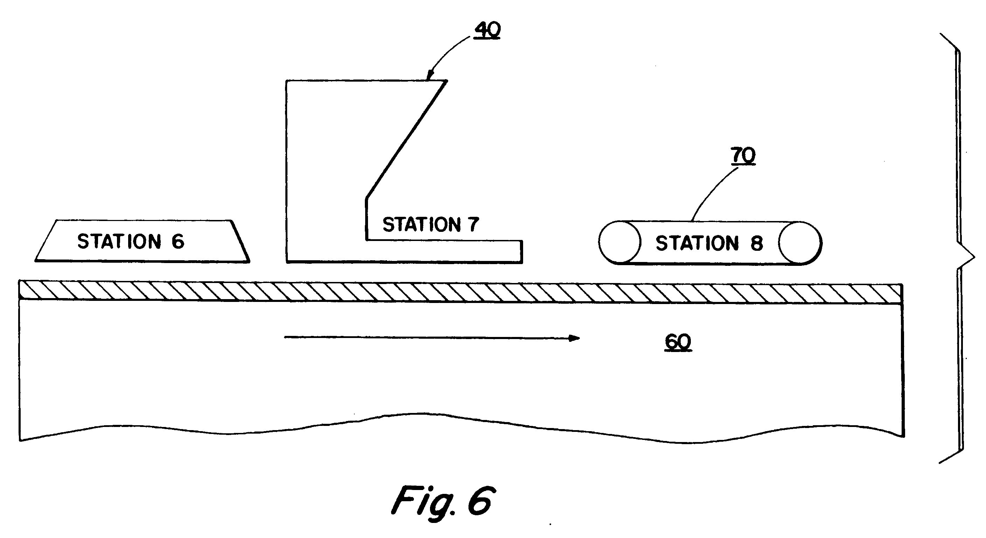

The feed screw dosing arrangement 40 for the filling mixture, as shown in Fig. 4, essentially consists of a frame and motor console (not shown), a hopper 42, funnel, a three-phase motor 44, a stepless or continually adjustable drive or gearing 46, commonly actuated filling stations for the molds 26 including a switching connection for all operative stations in the drive train, electrical circuitry, synchronizing circuit, homogenizing chamber 47, dosing feed screws 48, and dosing conduits 50 whose number is selected in conformance with the number of rows of bars contained in the mold, wherein the dosing conduits are removable in conjunction with a cover plate. The feed screw dosing arrangement 40 is fixedly mountable on a continuous molding installation 60, as shown in Figs. 5 and 6, and is synchronized with the travel or advance of the latter.

The filling composition 18 for the cereal bar is continuously filled into the funnel of hopper 42, as shown in Fig. 4 of the drawings, monitored with probes or sensors 52 as to its feed level, and regulated as required. The filling composition 18 flows through the homogenizing chamber 46 which located at the bottom of the hopper 42, and is uniformly conducted into the dosing conduits 50 by means of horizontally oriented feed screws 54. In the homogenizing chamber 46, commensurate with the composition and requirements of the filling 18, there can be utilized separations between the individual flights of the dosing feed screws 54. These feed screws 54 convey the filling 18 uniformly and in a careful or gentle manner through the dosing conduits 50. At the discharge ends 56 of the dosing conduits 50, the filling material 18 drops into the cavities of the chocolate-lined molds 26. The dosing is effected through the intermediary of the metering or dosing feed screws 54, whose number of rotations determine the dosing quantity of the filling material into the molds.

The dosing sequence is carried out in synchronism with the speed of travel of the molds 26 which are advanced on a transport chain of the continuous in-line molding installation. Hereby, at the beginning of the advance of the molds, as shown diagrammatically in Fig. 5, there commences the initial filling of the chocolate shell in the molds, which is of a duration of approximately one second, in such a manner that the first and last filling portions drop into the upwardly opening chocolate shell possessing a not yet solidified mass, such that no filling material comes to rest on the edge of the shell or on the chocolate mold so as to thereby avoid any soiling of these elements.

The time for the filling is dependent upon the composition of the filling which is to be apportioned and upon the dimensions of the cereal bar.

The outer layer 24 for the filling constituents 20, which is designated as the fat adhesive layer, as shown in Fig. 3, pertains to a material which melts under the effect of heat. Due to this reason, the feed screw dosing arrangement 40, with consideration given to the product, must be arranged within a climatized or air-conditioned chamber along the continuous molding installation. The operating temperature and chamber temperature must be lower than 15°C. In essence, the chamber and operating temperature must be lower than the softening temperature for the fat adhesive layer 24, inasmuch as otherwise, as a result of encountering a premature melting of the fat adhesive layer at excessively high temperatures, there will be formed agglomerates and wear will be caused, which can readily lead to irregularities in the weight of the bars and to operational interruptions.

Thereafter, subsequent to the filling of the molds 26 with the first filling layer, the chocolate mold forms with the upwardly opening shells, and together with the first filling layer, are cooled in a cooling tunnel (not shown), at station 5 in Fig. 1, which is presently located along the path of the continuous molding installation.

After exiting from the cooling tunnel, the fat adhesive layer 24 about the filling 20 is heated by means of infrared heating to such an extent from above while located within the chocolate shells of the molds 26 which are transported along a conveyor chain, such that the temperature of the fat adhesive layer 24 on the cereal/nut filling is raised above its solidification point, without the composition of the chocolate dragee layer 22 which is arranged therebeneath heating up above its own solidification point.

The temperature of the casing or casing edge of the mold, in response to the heating of the filling 18 by means of infrared radiation, may at this point in time not be raised above the melting point of the chocolate shell mass lining the mold 26.

The heat radiation from the infrared heating is permitted to only reach the upper surface of the first filling layer and to melt the latter in the mold, and may only be of such an intensity that merely the fat adhesive layer 24 about the filling, but not that the edge of the shell in the mold or the chocolate dragee layer 22 of the filling 20 would be raised in temperature above the solidification point of the chocolate or dragee composition.

For example, the infrared heat may be emitted from an infrared lamp 64, as shown in Fig. 6, at a distance of about 50 to 80 mm above the fat adhesive layer of the filling, the heat above the product being in the range of about 55 to 80°C, and with a heating period of about 6 to 12 seconds.

The fat adhesive layer 24 is softened only to such an extent that there will not yet be encountered any complete liquefying of the fat.

In order to bear the heat directly against the fat adhesive layer of the filling in the chocolate shell, it is a prerequisite that the heat is conducted in a controlled manner by means of suitable fiber-optic conductors or infrared lamps against the portion of the filling which is to be heated.

The infrared heating device can consist of a suitable frame with rollers, infrared lamps, apertured plates, closure plates, distance adjustment, and potentiometers for the regulation of the heat intensity, as is known in the technology and is mounted on the continuous molding installation.

The second or successive filling layer for the cereal bar is filled into the shell of the mold through the intermediary of a further feed screw dosing arrangement 40 which is constructed similar to that employed for dosing the first filling layer into the cavity of the mold 26.

As in the instance of the first dosing arrangement, the second feed screw dosing installation can similarly consist of a frame, motor console, hopper, three-phase current motor, stepless or continually adjustable drive gear, commonly actuated filling stations with a switching coupling for all operative stations along the path of travel, electrical circuitry, synchronizing circuitry, homogenizing chamber, dosing feed screws, and dosing conduits whose number is correlated with the number of rows of bars present in the mold form; with the dosing conduits being removable with a cover plate. The feed screw dosing arrangement is fixedly mountable on a continuous molding installation and synchronized with the travel or rate of advance of the latter.

The drageed filling mixture 18 is continually filled into the hopper, as shown in Fig. 4, and monitored and regulated with regard to its level by means of probes or sensors. The filling flows through the homogenizing chamber, which is located at the bottom of the hopper, so as to be uniformly conveyed by horizontal dosing feed screws into the dosing conduits. In the homogenizing chamber, in conformance with the composition and requirements imparted by the filling, there can be provided separations between the individual flights of the dosing feed screws. These screws convey the filling uniformly and in a gentle manner through the dosing conduits. At the discharge ends of the latter, the filling drops into the cavities of the chocolate-lined molds 26.

The dosing of the filling is effected through dosing feed screws whose number of rotations determines the dosing quantity for the filling.

Inasmuch as also the outer fat adhesive layer of the second filling layer comprises a material which melts under the effect of heat, this dosing arrangement must also be arranged in a climate-controlled or air-conditioned chamber.

The operating temperature and room temperature must be lower than 15°C. The room and operating temperatures must be lower than the softening temperature for the fat adhesive layer inasmuch as there can be encountered agglomerates and wear caused by a premature melting of the second coating or fat adhesive layer at excessively high temperatures, which as a result thereof, can lead to irregularities in weight for the bar and to operational interruptions.

The dosing sequence for the filling into the molds is implemented in synchronism with the advance of the molds which are conveyed on a transport chain of the continuous molding installation. Hereby, with the beginning of the advance of the molds, the filling of the shells lining the molds, which lasts about 2 seconds, is initiated such that the first and last filling portions fall into the mass of the upwardly opening chocolate shell which is not yet solidified, such that no filling material can come to rest on the edge of the shell or on the chocolate mold form to be able to dirty these elements. The period of time for effectuating the filling sequence is dependent upon the composition of the filling which is to be apportioned and upon the dimensions of the bar. The foregoing is also related with the speed of travel of the employed continuous molding installation.

The further dosing sequence, as shown in Fig. 4, is approximately by 2 seconds longer and the dosing volume by over 2/3 larger than with the dosing of the first partial filling layer into the molds. It is also possible to increase the number of the rotations of the dosing feed screws to such an extent as to be able to attain a larger dosing volume within a shorter period of time. This has the result that after the infeed of the second filling layer, the filling protrudes above the edge of the upper rim of the mold. As a consequence thereof, the second filling layer must be fed into the prepared shell of the mold in such a manner that notwithstanding any overfilling, there will not be encountered any contamination or soiling of the rim or edges of the shells as well as on the chocolate molds. Any soiling of these regions can lead to a poor bonding between the subsequently applied chocolate cover and the filling. A dirtying of the chocolate molding forms can also lead to operational disturbances.

The filling is distributed within the molds by means of either shaking or vibrating the molds. This can be implemented through the intermediary of vibrators which are mounted at the sides of guide rails for the molds on the continuous molding installation.

Thereafter, the excess or protruding filling is compacted to such an extent through the application of pressure by means of either pressure rams or pressure plates of a compacting installation, that the upper surface of the filling is pressed down to approximately 1.5 mm below the rim of the molded chocolate shell.

This procedure is implemented when the thusly filled molds are advanced on a transport chain and pass below the compacting installation 70 as shown in Fig. 6. Hereby, in synchronism with the travel or advance of the molds, pressure rams or pressure plates are pressed against the apportioned filling 18, as is shown in Fig. 2, so that only the filling will be pressed together and compacted, without this filling being squeezed or pushed out of the mold shell. The rim or edge of the molded shell or the chocolate shell itself is not permitted to be subjected to a direct pressure, inasmuch as the shell which is already rigid at this point in time, could conceivably break.

The pouring weight of the filling, which has a volume of about 0.3 liters, must be compacted by a factor of about 1.3 times. The extent of the densification and compaction is dependent upon the pressure, (kg/cm²), heat (°C) and/or the quantity of fat (0.5 to 3% of the filling); and the type of fat (animal or vegetable) of the fat adhesive layer 24 which is applied as the last or outer coating onto the cereal, nut kernels etc. during the drageeing process.

In order to close off the molded chocolate shell along its bottom (shown in Fig. 2 with the bottom of the bar oriented upwardly) by means of a chocolate covering, the filling must be pressed so low through the action of the compacting below the upper edge of the chocolate shell, that sufficient space is made available above the filling for the receipt of the necessary quantity of chocolate composition, as shown in Fig. 2, so as to seal the chocolate covering or shell encompassing the cereal bar.

As shown in Fig. 2, the molds are cleaned through the application of scrapers and rotating brushes over their upper surfaces. Thereafter, the filled and upwardly opening forms are conveyed through a cooling section or tunnel.

After exiting from the cooling section, the molds are heated at the upwardly opening side in such a manner that not only the upper surface of the filling but also the edge of the shell will commence to melt. This is effected so that the chocolate mass forming the cover for the cereal bar, which is applied by means of a pouring apparatus, can adhere to the peripheral edge or rim of the shell and to thereby seal the chocolate covering or shell of the cereal bar.

The filled and sealed cereal bars are then cooled, removed from the molds, and packaged as required.

In the utilization of the inventive process, there were successfully produced chocolate-covered cereal bars having the following formulations:

### EXAMPLE 1

### FORMULATION FOR CHOCOLATE-COVERED BAR

### In % by weight of final bar product:

(a) 40 - 60 % bar-covering chocolate shell-molding
   - chocolate:: appr. dens. 1.18 - 1.25
   viscosity 1.2 - 4.2
   - Formulation:: cocoa mass 10 - 18 %
   sugar 42 - 55 %
   milk fat 4.0 - 8.5 %
   total fat 30 - 37 %
(b) 32 - 52 % filling- appr. density 0.27 - 0.75
   The binder content of the filling mixture should not be more than 50 % by weight of the total filling.
   (i) 35 - 65 % coated cereals or extruded cereals (crispies)
      - 50 % cereals:: appr. density
      wheat
      rice 0.11 - 0.18
      oats
      and the like
      - 50 % coating:: 47 - 49.5 % milk chocolate (see chocolate shell composition (a))
      0.5 - 3 % low melting fat vegetable or animal fat melting point or lower than 26° C (fat adhesive layer)
   (ii) 35 - 65 % coated nuts
      - 50 % nuts:: hazelnuts
      peanuts size 2.5 - 5.5 mm
      almonds
      and the like
      - 50 % coating:: 47 - 49.5 % milk chocolate (see chocolate shell composition)
      0.5 - 3 % low melting vegetable or animal fat melting point of lower than 26° C (fat adhesive layer)
(c) 8 - 10 % chocolate bottom for bar shell - see chocolate shell composition (a)

The preparation and mixing of the tilling constituted the steps of providing for cereal extrusion in a cooking extruder; drageeing of the cereal by coating the latter with milk chocolate as a first layer and then an outer layer of a low melting fat forming a fat adhesive layer pursuant to the invention, this generally being implemented in a coating pan;
roasting, cutting and drageeing the nuts, in this instance either hazelnuts, peanuts or almonds and the like, as set forth with respect to Example 1 as a constituent of the filling, also implemented in a standard type of roasting apparatus, cutting structure and a coating pan, wherein the nuts are drageed by a fat-containing or chocolate layer encompassed by an outer layer of the low melting point fat forming the fat adhesive layer; and thereafter mixing the filling constituted of the drageed cereal and nuts in a suitable mixing device.

The parameters for forming the cereal mixtures were essentially as follows, utilizing crispies and hazelnuts:

### CEREAL MIXTURE DRAGEEFICATION

| Chocolate coating parameters: | |
|---|---|
| Crispies | Desired Value |
| Filling | 100% |
| Chocolate coated | 20 % - 100 % |
| Chocolate temperature | 27.5° - 29.5° C |
| Air in (vol.) | 150 m3 - 210 m3 |
| Air in temperature | 13° C - 22° C |
| Air out (vol.) | 110 m³ - 170 m³ |
| Air out temperature | 18° C - 24° C |

| Hazelnuts coating parameters: | |
|---|---|
| Filling | 100 % |
| Chocolate coated | 20 % - 100 % |
| Chocolate temperature | 27.5° - 29.5° C |
| Air in (vol.) | 150 m³ - 210 m³ |
| Air in temperature | 13° C - 22° C |
| Air out (vol.) | 110 m³ - 170 m³ |
| Air out temperature | 18 °C - 24° C |

| Butter fat coating parameters: | |
|---|---|
| Coated | 0.5 - 3 % |
| Fat temperature | below 28° C |
| Air in (vol.) | 140 m³ - 190 m³ |
| Air in temperature | 5° C - 18° C |
| Air out (vol.) | 100 m³ - 170 m³ |
| Air out temperature | 10° C - 20° |

Thereafter, as indicated in the specification and drawings, the chocolate-covered cereal bar is formed in a continuous molding installation, as shown in Figs. 1 and 2 of the drawings, setting forth hereinabove the steps, and the parameters employed for the molding installation.

| Steps (Fig. 1) | Parameters |
|---|---|
| Mold heating | 28° - 32° C |
| Depositing chocolate mass | 28.3° - 30.5° C |
| Shell forming | 27°C |
| 1st Distribution of filling | Filling 5° - 12° C |
| | Room 8° - 15° C |
| Cooling | 4° - 9° C |
| Heating | 60° - 85° C |
| 2nd Distribution of Filling | Filling 5° - 12° C |
| | Room 8° - 15° C |
| Sizing of filling Compression | 0.35 - 0.85 kp/cm2 |
| Scraping, cleaning | Rolls, Scrapers |
| Cooling | 5° - 12° C |
| Heating | 30° - 45° C |
| Bottoming | 28.3° - 30.5° C |
| Cooling | 8° - 14° C |
| Unmolding | |
| Molding line speed | 15 - 25 molds/min. |

Pursuant to the invention, Example 2 illustrates a precise formulation of a chocolate-covered cereal bar intended for commercial use, as produced by the inventive continuous molding process:

### EXAMPLE 2

### FORMULATION FOR CHOCOLATE-COVERED CEREAL BAR

### In % by weight of final bar product:

(a) 56 % chocolate shell (molded) milk chocolate:
   appr. dens. 1.2
   appr. dens. 1.2
   - Formulation:: cocoa mass 11.7 %
   sugar 47.2 %
   milk fat 5.1 %
   total fat 31.4 %
(b) 34 % filling, appr. density 0.37
   (i) 50 % coated wheat crispies; 4 mm, in dia.
      - 50 % cereals:: wheat crispies
      appr. density 0.127
      - Formulation:: wheat flour 69.00 %
      sucrose 25.00 %
      skimmed milk powder 5.00 %
      salt 0.55 %
      hazelnut flavoring 0.45 %
      - 50 % coating: 49 % milk chocolate appr. dens. 1.2
      - Formulation:: cocoa mass 11 %
      sugar 39.5 %
      milk fat 4.2 %
      total fat 35.4 %
      1 % butter fat @ 26° C (fat adhesive layer)
   (ii) 50 % coated hazelnuts
      75 % hazelnuts size 4mm +/-1 mm

   - 25 % coating:: 49 % milk chocolate appr. dens. 1.2
   - Formulation:: cocoa mass 11 %
   sugar 39.5 %
   milk fat 4.2 %
   total fat 35.4 %
   1 % butter fat @ 26° C (fat adhesive layer)
(c) 10 % chocolate bottom for bar - see chocolate shell composition (a)

In summation, the foregoing process employed with formulations for chocolate-covered bars, wherein each mold had a length of 115 - 120 mm, a width of 20 - 25 mm and a height of 20 mm provided that through the chocolate shell forming process on a continuous molding line, in comparison with previous extrusion methods, the quantity filling in a chocolate-covered bar, can be higher than 33 %, and as a result, produces a bar of lighter weight.

## Claims

1. A process for the production of a filled chocolate-covered bar, on a molding installation having at least one continuously advancing mold for forming said bar; comprising conducting a quantity of a liquefied chocolate mass into said mold and distributing said chocolate mass over the interior surface of said mold; dosing specified quantities of a drageed filling mixture into said mold by feed screw dosing means while maintaining said chocolate mass in a substantially liquefied state; and subjecting said filling mixture and chocolate mass to predetermined conditions of pressure and temperature to bond said filling mixture and chocolate mass constituents and form a chocolate-covered bar having the appearance and sensorial lightness of an ordinary bar.

2. A process as claimed in claim 1, wherein the filling mixture comprises a cereal-containing filling mixture.

3. A process as claimed in claim 1 or claim 2, wherein said mold is advanced in said molding installation at a rate commensurate with the quantities of filling mixture discharged into said mold from said feed screw dosing means.

4. A process as claimed in any one of claims 1 to 3 wherein the rate of the discharge of said filling mixture from said feed screw dosing means is variable responsive to varying the speed of rotation of said feed screw dosing means.

5. A process as claimed in any one of claims 2 to 4, wherein said feed screw dosing means discharge the filling mixture into said mold in synchronism with the rate of advance of said mold through said installation.

6. A process as claimed in any one of claims 1 to 5, wherein said filling mixture is dosed into said mold in a plurality of partial filling sequences; and wherein said filling mixture is subjected in said mold to temperature treatments intermediate said partial filling sequences.

7. A process as claimed in claim 6, wherein said temperature treatments comprise applying infrared heat to at least portions of the upper surface of said filling mixture.

8. A process as claimed in claim 6 or claim 7, wherein said filling mixture is bonded to the chocolate mass in said mold responsive to cooling of said chocolate mass.

9. A process as claimed in any one of claims 6 to 8, wherein said filling mixture is subjected to compression subsequent to dosing of the final partial portion into said mold so as to impart a planar surface to said filling mixture at a level below the upper edge of said chocolate mass lining the mold.

10. A process as claimed in any one of claims 6 to 9, wherein a plurality of said feed screw dosing means each discharge a layer of said filling mixture into said mold so as to fill a quantity of filling mixture into said mold protruding above the upper edge of said mold prior to compressing of said filling mixture to a level below the edge of the mold.

11. A process as claimed in claim 9 or claim 10, wherein said filling mixture is compressed to increase the density thereof approximately by at least about 1.3 times.

12. A process as claimed in any one of claims 1 to 11, wherein the upper surface of said filling mixture is cleaned; a heat treatment is imparted to said filling mixture and to the edge of said chocolate mass in said mold; and a sealing covering layer of a chocolate mass is applied onto said upper surface of the filling mixture so as to form a cereal bar which is fully encompassed by said chocolate mass.

13. A process as claimed in claim 12, wherein the cleaning of the surface of said filling mixture in said mold is implemented with scrapers.

14. A process as claimed in claim 12, wherein the cleaning of the surface of said filling mixture in said mold is implemented with rotatable roller brushes.

15. A process as claimed in any one of claims 1 to 14, wherein said filled chocolate-covered bar is cooled in said mold and unmolded for further treatment or packaging.

16. A process as claimed in any one of claims 1 to 15, wherein said chocolate mass and filling mixture are cooled in said mold so as to form a bond therebetween.

17. A process as claimed in any one of claims 1 to 16, wherein said filling mixture is homogeneously distributed over the chocolate mass in said mold.

18. A process as claimed in claim 17, wherein vibratory movement is imparted to said mold to effectuate the homogeneous distribution of said filling mixture.

19. A process as claimed in any one of claims 1 to 18, wherein said dosing of said filling mixture is effectuated in an air-conditioned environment at an ambient temperature which is below about 15°C.

20. A process as claimed in any one of claims 1 to 19, wherein said at least one mold is preheated to maintain the chocolate mass lining said mold in a predetermined liquefied state.

21. A process as claimed in any one of claims 1 to 20, comprising the steps of:
(a) preheating said at least one mold,
(b) pouring a quantity of a chocolate mass into said mold, and distributing said chocolate mass over the surfaces of said mold so as to form a shell for the bar while maintaining the mass in a liquefied condition;
(c) feeding a quantity of said filling mixture into said mold to partially fill the cavity thereof;
(d) cooling said mold to form a bond between said chocolate mass and said filling mixture;
(e) imparting heat to the upper surface of said filling mixture;
(f) feeding a further quantity of said filling mixture into said mold superimposed on said first quantity of said filling mixture so as to protrude above the upper edge of said mold;
(g) applying surface pressure to said filling mixture so as to compact said filling mixture to lower the upper surface level thereof below the edge of said chocolate mass in said mold;
(h) cooling said filling mixture and said chocolate mass in said mold to form a bond therebetween;
(i) heating said mold and the edge of said chocolate mass;
(j) applying a covering of a chocolate mass over said filling mixture and the edge of said mold;
(k) cooling said mold to form a bond between said chocolate covering, filling mixture and the edge of the chocolate mass in said mold to provide a sealed chocolate cover about said filling mixture;
(l) and unmolding said formed chocolate-covered bar for further processing.

22. A process as claimed in any one of claims 1 to 21, wherein said filling mixture is constituted from dry cereal constituents and/or nut kernels; a first layer consisting of a fat-containing composition encompassing at least some of said cereal/nut kernel constituents; and a second outer layer consisting of a fat and forming an adhesive layer encompassing said first inner layer.

23. A process as claimed in claim 22, wherein said first and second layers encompassing each said cereal and/or nut kernel components are 50% by weight or less than the weight of the total combined constituents of said filling.

24. A process as claimed in claim 22 or claim 23, wherein said second outer layer has a lower melting temperature than the first layer.

25. A process as claimed in any one of claims 22 to 24, wherein the melting temperature of said fat adhesive layer is lower than 26°C.

26. A process as claimed in any one of claims 22 to 25, wherein said outer fat adhesive layer consists of an animal fat.

27. A process as claimed in claim 26, wherein said animal fat is butter fat.

28. A process as claimed in any one of claims 22 to 25, wherein said outer fat adhesive layer consists of a vegetable fat.

29. A process as claimed in any one of claims 22 to 25, wherein said fat-containing first layer comprises a chocolate mass.

## Patentansprüche

1. Verfahren zur Herstellung eines gefüllten Riegels mit Schokoladenüberzug in einer Formanlage mit mindestens einer kontinuierlich vorbewegten Form zum Formen des genannten Riegels, umfassend Einleiten einer Menge einer flüssigen Schokoladenmasse in die genannte Form und Verteilen der genannten Schokoladenmasse über die innere Oberfläche der genannten Form, Dosieren vorgegebener Mengen einer dragierten Füllungsmischung durch Zuführschnecken-Dosiereinrichtungen in die genannte Form, wobei die Schokoladenmasse in einem im wesentlichen flüssigen Zustand gehalten wird, und Aussetzen der genannten Füllungsmischung und Schokoladenmasse vorbestimmten Druck- und Temperaturbedingungen zum Verbinden der Bestandteile der genannten Füllungsmischung und Schokoladenmasse und Formen eines Riegels mit Schokoladenüberzug, der das Ansehen und die sensorische Leichtigkeit eines gewöhnlichen Riegels hat.

2. Verfahren nach Anspruch 1, wobei die Füllungsmischung eine getreidehaltige Füllungsmischung umfaßt.

3. Verfahren nach Anspruch 1 oder 2, wobei die genannte Form in der genannten Formanlage mit einer Geschwindigkeit vorbewegt wird, die mit den Mengen der von den genannten Zuführschnecken-Dosiereinrichtungen in die genannte Form ausgetragenen Füllungsmischung in Einklang steht.

4. Verfahren nach einem der Ansprüche 1 bis 3, wobei die Geschwindigkeit, mit der die genannte Füllungsmischung von den genannten Zuführschnecken-Dosiereinrichtungen ausgetragen wird, ansprechend auf die Variierung der Drehgeschwindigkeit der genannten Zuführschnecken-Dosiereinrichtungen variabel ist.

5. Verfahren nach einem der Ansprüche 2 bis 4, wobei die genannten Zuführschnecken-Dosiereinrichtungen die Füllungsmischung in Gleichzeitigkeit mit der Vorbewegungsgeschwindigkeit der genannten Form durch die genannte Anlage in die genannte Form austragen.

6. Verfahren nach einem der Ansprüche 1 bis 5, wobei die genannte Füllungsmischung in einer Mehrzahl von Teilfüllsequenzen in die genannte Form dosiert wird und wobei die genannte Füllungsmischung in der genannten Form zwischen den genannten Teilfüllsequenzen Temperaturbehandlungen ausgesetzt wird.

7. Verfahren nach Anspruch 6, wobei die genannten Temperaturbehandlungen das Anwenden von Infrarotwärme zumindest auf Teile der oberen Oberfläche der genannten Füllungsmischung umfassen.

8. Verfahren nach Anspruch 6 oder Anspruch 7, wobei die genannte Füllungsmischung ansprechend auf Abkühlen der genannten Schokoladenmasse mit der Schokoladenmasse in der genannten Form verbunden wird.

9. Verfahren nach einem der Ansprüche 6 bis 8, wobei die genannte Füllungsmischung nach dem Dosieren der letzten Teilportion in die genannte Form Druck ausgesetzt wird, um der genannten Füllungsmischung auf einer Höhe unter dem oberen Rand der genannten die Form auskleidenden Schokoladenmasse eine ebene Oberfläche zu verleihen.

10. Verfahren nach einem der Ansprüche 6 bis 9, wobei eine Mehrzahl der genannten Zuführscbnecken-Dosiereinrichtungen jeweils eine Schicht der genannten Füllungsmischung in die genannte Form austragen, um vor dem zusammendrücken der genannten Füllungsmischung auf eine Höhe unter dem Rand der Form eine über den oberen Rand der genannten Form überstehende Menge Füllungsmischung in die genannte Form einzufüllen.

11. Verfahren nach Anspruch 9 oder 10, wobei die genannte Füllungsmischung zusammengedrückt wird, um ihre Dichte ungefähr um mindestens etwa das 1,3fache zu vergrößern.

12. Verfahren nach einem der Ansprüche 1 bis 11, wobei die obere Oberfläche der genannten Füllungsmischung gereinigt wird, eine Wärmebehandlung auf die genannte Füllungsmischung und den Rand der genannten Schokoladenmasse in der genannten Form ausgeübt wird und eine verschließende Deckschicht aus einer Schokoladenmasse auf die genannte obere Oberfläche der Füllungsmischung aufgetragen wird, um einen Getreideriegel zu formen, der von der genannten Schokoladenmasse vollständig umschlossen ist.

13. Verfahren nach Anspruch 12, wobei die Reinigung der Oberfläche der genannten Füllungsmischung in der genannten Form mit Schabern durchgeführt wird.

14. Verfahren nach Anspruch 12, wobei die Reinigung der Oberfläche der genannten Füllungsmischung in der genannten Form mit drehbaren Zylinderbürsten durchgeführt wird.

15. Verfahren nach einem der Ansprüche 1 bis 14, wobei der genannte gefüllte Riegel mit Schokoladenüberzug in der genannten Form abgekühlt und zur weiteren Behandlung oder Verpackung aus der Form entfernt wird.

16. Verfahren nach einem der Ansprüche 1 bis 15, wobei die genannte Schokoladenmasse und Füllungsmischung in der genannten Form abgekühlt werden, damit sich zwischen ihnen eine Verbindung bildet.

17. Verfahren nach einem der Ansprüche 1 bis 16, wobei die genannte Füllungsmischung homogen über die genannte Schokoladenmasse in der genannten Form verteilt wird.

18. Verfahren nach Anspruch 17, wobei Schwingungsbewegungen auf die genannte Form übertragen werden, um die homogene Verteilung der genannten Füllungsmischung zu bewirken.

19. Verfahren nach einem der Ansprüche 1 bis 18, wobei die genannte Dosierung der genannten Füllungsmischung in einer klimatisierten Umgebung bei einer unter etwa 15° liegenden Umgebungstemperatur erfolgt.

20. Verfahren nach einem der Ansprüche 1 bis 19, wobei die genannte mindestens eine Form vorgewärmt wird, um die die genannte Form auskleidende Schokoladenmasse in einem vorbestimmten flüssigen Zustand zu halten.

21. Verfahren nach einem der Ansprüche 1 bis 20, umfassend die folgenden Schritte:
(a) Vorwärmen der genannten mindestens einen Form;
(b) Eingießen einer Menge einer Schokoladenmasse in die genannte Form und Verteilen der genannten Schokoladenmasse über die Oberflächen der genannten Form, um eine Hülle für den Riegel zu formen, während die Masse in einem flüssigen Zustand gehalten wird;
(c) Zuführen einer Menge der genannten Füllungsmischung in die genannte Form zum teilweisen Füllen ihres Hohlraums;
(d) Abkühlen der genannten Form, um zwischen der genannten Schokoladenmasse und der genannten Füllungsmischung eine Verbindung zu bilden;
(e) Übertragen von Wärme auf die obere Oberfläche der genannten Füllungsmischung;
(f) Zuführen einer weiteren Menge der genannten Füllungsmischung auf die genannte erste Menge der genannten Füllungsmischung in die genannte Form, so daß sie über den oberen Rand der genannten Form übersteht;
(g) Anwenden von Oberflächendruck auf die genannte Füllungsmischung, um die genannte Füllungsmischung zu verdichten und die Höhe ihrer oberen Oberfläche unter den Rand der genannten Schokoladenmasse in der genannten Form zu senken;
(h) Abkühlen der genannten Füllungsmischung und der genannten Schokoladenmasse in der genannten Form, um dazwischen eine Verbindung zu bilden;
(i) Erwärmen der genannten Form und des Randes der genannten Schokoladenmasse;
(j) Aufbringen eines Überzugs aus einer Schokoladenmasse auf die genannte Füllungsmischung und den Rand der genannten Form;
(k) Abkühlen der genannten Form, um zwischen dem genannten Schokoladenüberzug, der Füllungsmischung und dem Rand der Schokoladenmasse in der genannten Form eine Verbindung zu bilden, um einen geschlossenen Schokoladenüberzug um die genannte Füllungsmischung vorzusehen;
(l) und Entfernen des genannten geformten Riegels mit Schokoladenüberzug aus der Form zur weiteren Verarbeitung.

22. Verfahren nach einem der Ansprüche 1 bis 21, wobei sich die genannte Füllungsmischung aus trockenen Getreidebestandteilen und/oder Nußkernen zusammensetzt, wobei eine erste Schicht aus einer fetthaltigen Zusammensetzung umschließend mindestens einige der genannten Getreide-/Nußkernbestandteile besteht und eine zweite äußere Schicht aus einem Fett besteht und eine die genannte erste innere Schicht umschließende Haftschicht bildet.

23. Verfahren nach Anspruch 22, wobei die genannte erste und zweite Schicht, die jede der genannten Getreide- und/oder Nußkernkomponenten umschließen, 50 % des Gewichts der gesamten kombinierten Bestandteile der genannten Füllung oder weniger ausmachen.

24. Verfahren nach Anspruch 22 oder Anspruch 23, wobei die genannte zweite äußere Schicht eine niedrigere Schmelztemperatur hat als die erste Schicht.

25. Verfahren nach einem der Ansprüche 22 bis 24, wobei die Schmelztemperatur der genannten haftenden Fettschicht unter 26°C liegt.

26. Verfahren nach einem der Ansprüche 22 bis 25, wobei die genannte äußere haftende Fettschicht aus einem tierischen Fett besteht.

27. Verfahren nach Anspruch 26, wobei das genannte tierische Fett Butter ist.

28. Verfahren nach einem der Ansprüche 22 bis 25, wobei die genannte äußere haftende Fettschicht aus einem Pflanzenfett besteht.

29. Verfahren nach einem der Ansprüche 22 bis 25, wobei die genannte fetthaltige erste Schicht eine Schokoladenmasse aufweist.

## Revendications

1. Procédé de production d'une barre fourrée recouverte de chocolat, sur une installation de moulage ayant au moins un moule avançant continuellement pour former ladite barre; comprenant la conduite d'une quantité de masse de chocolat liquéfiée dans ledit moule et la distribution de ladite masse de chocolat par dessus la surface intérieure dudit moule; le dosage de quantités spécifiées d'un mélange de fourrage en dragées dans ledit moule par des moyens de dosage à vis sans fin tout en maintenant ladite masse de chocolat dans un état sensiblement liquéfié; et présentation desdits mélange de fourrage et masse de chocolat à des conditions prédéterminées de pression et de température pour fixer lesdits constituants de mélange de fourrage et de masse de chocolat et former une barre recouverte de chocolat ayant l'aspect et la légèreté sensorielle d'une barre ordinaire.

2. Procédé tel que revendiqué à la revendication 1, dans lequel le mélange de fourrage comprend un mélange de fourrage contenant des céréales.

3. Procédé tel que revendiqué à la revendication 1 ou la revendication 2, dans lequel ledit moule est avancé dans ladite installation de moulage à une vitesse en rapport avec les quantités de mélange de fourrage déchargées dans ledit moule à partir desdits moyens de dosage à vis sans fin.

4. Procédé tel que revendiqué dans l'une quelconque des revendications 1 à 3, dans lequel la vitesse de décharge dudit mélange de fourrage à partir desdits moyens de dosage à vis sans fin est variable en réponse à la variation de la vitesse de rotation desdits moyens de dosage à vis sans fin.

5. Procédé tel que revendiqué dans l'une quelconque des revendications 2 à 4, dans lequel lesdits moyens de dosage à vis sans fin déchargent le mélange de fourrage dans ledit moule en synchronisation avec la vitesse d'avancée dudit moule à travers ladite installation.

6. Procédé tel que revendiqué dans l'une quelconque des revendications 1 à 5, dans lequel ledit mélange de fourrage est dosé dans ledit moule selon une pluralité de séquences de fourrage partiel; et dans lequel ledit mélange de fourrage est soumis dans ledit moule à des traitements de température entre lesdites séquences de fourrage partiel.

7. Procédé tel que revendiqué à la revendication 6, dans lequel lesdits traitements de température comprennent l'application de chaleur infrarouge à au moins des parties de la surface supérieure dudit mélange de fourrage.

8. Procédé tel que revendiqué à la revendication 6 ou la revendication 7, dans lequel ledit mélange de fourrage est fixé a la masse de chocolat dans ledit moule à la suite du refroidissement de ladite masse de chocolat.

9. Procédé tel que revendiqué dans l'une quelconque des revendications 6 à 8, dans lequel ledit mélange de fourrage est soumis à une compression après le dosage de la demière partie partielle dans ledit moule de manière à donner une surface plate audit mélange de fourrage à un niveau en dessous du bord supérieur de ladite masse de chocolat garnissant le moule.

10. Procédé tel que revendiqué dans l'une quelconque des revendications 6 à 9, dans lequel une pluralité desdits moyens de dosage à vis sans fin déchargent chacun une couche dudit mélange de fourrage dans ledit moule de manière à fourrer une quantité du mélange de fourrage dans ledit moule dépassant au-dessus du bord supérieur dudit moule avant la compression dudit mélange de fourrage à un niveau en dessous du bord du moule.

11. Procédé tel que revendiqué à la revendication 9 ou la revendication 10, dans lequel ledit mélange de fourrage est comprimé pour augmenter sa densité approximativement d'au moins environ 1,3 fois.

12. Procédé tel que revendiqué dans l'une quelconque des revendications 1 à 11, dans lequel la surface supérieure dudit mélange de fourrage est nettoyée; un traitement de chaleur est appliqué audit mélange de fourrage et au bord de ladite masse de chocolat dans ledit moule; et une couche de masse de chocolat de recouvrement étanche est appliquée sur ladite surface supérieure du mélange de fourrage de manière à former une barre de céréales qui est entièrement enrobée par ladite masse de chocolat.

13. Procédé tel que revendiqué à la revendication 12, dans lequel le nettoyage de la surface dudit mélange de fourrage dans ledit moule est mis en oeuvre avec des raclettes.

14. Procédé tel que revendiqué à la revendication 12, dans lequel le nettoyage de la surface dudit mélange de fourrage dans ledit moule est mis en oeuvre avec des rouleaux laveurs rotatifs.

15. Procédé tel que revendiqué dans l'une quelconque des revendications 1 à 14, dans lequel ladite barre fourrée recouverte de chocolat est refroidie dans ledit moule et démoulée en vue d'un traitement ou conditionnement ultérieur.

16. Procédé tel que revendiqué dans l'une quelconque des revendications 1 à 15, dans lequel lesdits masse de chocolat et mélange de fourrage sont refroidis dans ledit moule de manière à les fixer l'un à l'autre.

17. Procédé tel que revendiqué dans l'une quelconque des revendications 1 à 16, dans lequel ledit mélange de fourrage est distribué de manière homogène par dessus la masse de chocolat dans ledit moule.

18. Procédé tel que revendiqué à la revendication 17, dans lequel un mouvement vibratoire est appliqué audit moule pour effectuer la distribution homogène dudit mélange de fourrage.

19. Procédé tel que revendiqué dans l'une quelconque des revendications 1 à 18, dans lequel ledit dosage dudit mélange de fourrage est effectué dans un environnement climatisé à une température ambiante qui est inférieure à environ 15°C.

20. Procédé tel que revendiqué dans l'une quelconque des revendications 1 à 19, dans lequel ledit au moins un moule est préchauffé pour maintenir la masse de chocolat garnissant ledit moule dans un état liquéfié prédéterminé.

21. Procédé tel que revendiqué dans l'une quelconque des revendications 1 à 20, comprenant les étapes de:
(a) préchauffage dudit au moins un moule,
(b) versement d'une quantité d'une masse de chocolat dans ledit moule, et distribution de ladite masse de chocolat par dessus les surfaces dudit moule de manière à former une coquille pour la barre tout en maintenant la masse dans une condition liquéfiée;
(c) alimentation d'une quantité dudit mélange de fourrage dans ledit moule pour fourrer partiellement la cavité de celui-ci;
(d) refroidissement dudit moule pour fixer ladite masse de chocolat audit mélange de fourrage;
(e) application de chaleur sur la surface supérieure dudit mélange de fourrage;
(f) alimentation d'une autre quantité dudit mélange de fourrage dans ledit moule superposée à ladite première quantité dudit mélange de fourrage de manière à dépasser par dessus le bord supérieur dudit moule;
(g) application d'une pression de surface sur ledit mélange de fourrage de manière à compacter ledit mélange de fourrage pour abaisser le niveau de la surface supérieure de celui-ci en dessous du bord de ladite masse de chocolat dans ledit moule;
(h) refroidissement dudit mélange de fourrage et de ladite masse de chocolat dans ledit moule pour les fixer l'un à l'autre.
(i) chauffage dudit moule et du bord de ladite masse de chocolat;
(j) application d'une couverture de masse de chocolat par dessus ledit mélange de fourrage et le bord dudit moule;
(k) refroidissement dudit moule pour fixer ensemble lesdits couverture de chocolat, mélange de fourrage et bord de la masse de chocolat dans ledit moule pour fournir une couverture de chocolat fermée autour dudit mélange de fourrage;
(l) et démoulage de ladite barre recouverte de chocolat formée en vue d'un traitement ultérieur.

22. Procédé tel que revendiqué dans l'une quelconque des revendications 1 à 21, dans lequel ledit mélange de fourrage est constitué par des constituants en forme de grains de céréales et/ou de noix; une première couche consistant en une composition à contenu de graisse englobant au moins une partie desdits constituants en forme de grains de céréales/noix; et une deuxième couche externe consistant en une graisse et formant une couche adhésive englobant ladite première couche interne.

23. Procédé tel que revendiqué à la revendication 22, dans lequel lesdites première et deuxième couches englobant chaque dit composant en forme de grain de céréales et/ou de noix représentent en poids 50% ou moins du poids des constituants combinés totaux dudit fourrage.

24. Procédé tel que revendiqué à la revendication 22 ou la revendication 23, dans lequel ladite deuxième couche externe a une température de fusion inférieure à celle de la première couche.

25. Procédé tel que revendiqué dans l'une quelconque des revendications 22 à 24, dans lequel la température de fusion de ladite couche adhésive de graisse est inférieure à 26°C.

26. Procédé tel que revendiqué dans l'une quelconque des revendications 22 à 25, dans lequel ladite couche adhésive de graisse externe consiste en graisse animale.

27. Procédé tel que revendiqué à la revendication 26, dans lequel ladite graisse animale est la graisse du beurre.

28. Procédé tel que revendiqué dans l'une quelconque des revendications 22 à 25, dans lequel ladite couche adhésive de graisse externe consiste en graisse végétale.

29. Procédé tel que revendiqué dans l'une quelconque des revendications 22 à 25, dans lequel ladite première couche à contenu de graisse comprend une masse de chocolat.
